(19) Europäisches Patentamt
European Patent Office
Office européen des brevets

(11) Publication number: 0 156 174
A2

(12) # EUROPEAN PATENT APPLICATION

(21) Application number: 85102165.9

(22) Date of filing: 26.02.85

(51) Int. Cl.[4]: C 08 B 30/00

(30) Priority: 27.02.84 IL 71080

(43) Date of publication of application: 02.10.85 Bulletin 85/40

(84) Designated Contracting States: AT BE CH DE FR GB IT LI LU NL SE

(71) Applicant: Galam Ltd.
Kibbutz Maanit
Post Menasha, 37855(IL)

(71) Applicant: Technion Research & Development Foundation Ltd.
Technion City
Haifa(IL)

(72) Inventor: Biss, Rachel
Kibbutz Maanit
Post Menasha 37855(IL)

(72) Inventor: Cogan, Uri
40 Abba Hushi Boul.
Haifa 34781(IL)

(74) Representative: Kinzebach, Werner, Dr.
Patentanwälte Reitstötter, Kinzebach und Partner
Bauerstrasse 22
D-8000 München 40(DE)

(54) **Production of starch from corn.**

(57) The time for the production of starch from corn is reduced to about one-half the normal time, which results in a doubling of the capacity of existing installations, by subjecting corn which has not previously been subjected to lactic fermentation, to steeping in a medium containing $SO_2$ under acid conditions such that lactic fermentation cannot occur. Proteins in the corn kernel, including insoluble proteins which become solubilized, are more quickly removed from the starch than by conventional lactic fermentation followed by treatment with $SO_2$. In addition, the quality of the final products is improved.

EP 0 156 174 A2

1

The invention relates to the production of starch from corn.

In the production of corn from starch, the corn is generally first steeped to effect softening of the kernel so that the germ, fiber, gluten and starch can be separated and the soluble components removed from the kernel.

The conventional steeping process is a two-phase process comprising a first lactic fermentation phase followed by a $SO_2$ phase, and the conventional process generally lasts about 40 - 48 hours.

The process involves countercurrent washing of the corn by aqueous solutions and in the first, or lactic fermentation phase the fresh corn is soaked in lactic bacteria-rich solution and subjected to lactic fermentation for about 20 hours. The oldest corn is treated with an aqueous solution to which about 0,08 - 0,2 % of $SO_2$ has been added and the $SO_2$ has the effect of preventing further lactic fermentation. The steeping battery varies in size but generally consists of about 8 - 12 tanks.

In the countercurrent process, which is actually a batch countercurrent process, the $SO_2$ in each tank as the solution moves toward the freshest corn reduces in level and at a level below about 400 ppm, which takes about 20 hours, the lactic bacteria can develop and the same effects lactic fermentation.

The introduction of higher levels of $SO_2$ into the initial aqueous solutions, and increases of the flow rate of the water have not been effective in reducing the overall steeping time in the production of starch. Shorter steeping times have not resulted in efficient separation of the starch. It has thus been assumed that generally a steeping time of about 40 hours is necessary to loosen the starch in the endosperm of the corn kernels by solubilizing or softening the protein structure of the matrix in which the starch is embedded.

Efforts to improve the overall process were mainly attempts to improve the lactic fermentation, for example by the addition of a small amount of $SO_2$ to the lactic steep water to provide optimum growth of the lactic acid bacteria while inhibiting the growth of undesirable microorganisms (U.S. Patent No. 4,359,528) or by adding Lactobacillus culture into the steep water (U.K. Patent No. 1,489,909).

In accordance with the present invention, substantial lactic fermentation as a positive step is totally eliminated and the corn is instead directly subjected to $SO_2$ under acid conditions such that lactic fermentation cannot take place. As a result the total steeping time needed to soften the kernel so as to permit germ, fiber, gluten and starch separation and removal of soluble components from the corn so that the starch can be recovered therefrom, is reduced to about one-half the time required in the normal two-phase steeping process.

It is accordingly a primary object of the present invention to provide for the steeping of corn for the production of starch therefrom in about one-half the time normally required.

It is another object of the present invention to provide a method of producing starch from corn by steeping of the corn, which method totally avoids lactic fermentation.

It is yet a further object of the present invention to provide for the production of starch of a quality at least equal to that produced by two-phase lactic fermentation followed by $SO_2$ treatment while avoiding lactic fermentation and thus reducing the total time to about one-half.

Other objects and advantages of the present invention will be apparent from a further reading of the specification and of the appended claims.

With the above and other objects in view, the present invention mainly comprises subjecting corn which has not been previously subjected to lactic fermentation to treatment by $SO_2$ in aqueous medium under acid conditions such that lactic fermentation cannot take place, whereby the starch granules are effectively loosened and the starch can be produced from the thus treated corn.

In accordance with the present invention the corn which has not been previously subjected to lactic fermentation is steeped in an aqueous medium containing $SO_2$ under acid

conditions such that lactic fermentation cannot take place. The pH of the acidic medium for the purposes of the method of the invention is generally between about 2,2 and 3,9, preferably 2,8 - 3,9, and most preferably at a pH of about 3,5 - 3,8.

The acidity of the medium to effect a pH range such that lactic fermentation is hindered can be achieved by means of any suitable acid, mineral acid or organic acid, e.g. hydrochloric acid, sulfuric acid, orthophosphoric acid, acetic acid, fumaric acid, tartaric acid, citric acid, malic acid, etc., or mixtures thereof. It is also possible to maintain the desired pH range without the addition of another acid by the use of relatively large amounts of sulfur dioxide. In such event at the end of the steeping, the excess sulfur dioxide which might exceed the maximum permissible levels, can be destroyed or expelled by known means.

In general, however, the simpler procedure is preferred, namely the use of $SO_2$ plus another mineral acid or an organic acid. Of course, the mineral acids are preferred from the standpoint of economy.

The process can be carried out at any common temperature used for corn steeping. Temperatures of between about 10 - 60°C are suitable. The most preferred temperature is about 50°C.

The concentration of $SO_2$ in the steeping water which is at a pH such that lactic fermentation does not occur is generally maintained at between about 400 and 4000 ppm,

preferably 400 - 3500 ppm and most preferably about 1000 - 2000 ppm.

The steeping process according to the present invention comes to completion in between about 18 - 24 hours, 18 - 20 hours generally being sufficient.

In accordance with a preferred embodiment of the present invention, the steeping during the intial period of up to about 6 - 8 hours is accompanied with agitation, without further agitation during the remainder of the process. While further agitation can be continued during the entire process, it has been found that after about 6 - 8 hours the agitation does not in any way improve the process, and therefore can be eliminated, with consequent reduction in energy costs, without in any way adversely affecting the process.

In any event, as indicated, the overall process of the present invention requires between about 18 - 24 hours, as compared to the generally utilized two-phase process which requires between about 36 - 48 hours. The savings in time also results in a saving in physical structure since plants of one-half the size can produce the same quantity of starch as the older plants of double the size. On the other hand, the process of the present invention can be carried out in existing plants in which case the capacity is doubled.

While the invention is not meant to be limited to any theory of why the process of the present invention is so effective, the following theory is given in the hope that

it will lead to further research and still further advances in the art.

The conventional steeping process which comprises a lactic fermentation phase followed by the $SO_2$ phase has the objectives of softening the kernel so that the germ, fiber, gluten and starch can be separated and the soluble components removed from the kernel. In addition the objectives of the process include prevention of undesirable microbial activity and the provision of cleaning of the kernel.

Whereas the separation of the germ and the fiber from the endosperm is achieved during steeping with relative ease, considerable time is required to effect the release of the starch granules from the protein matrix. Corn proteins consist of water soluble albumins and globulins (17%), water insoluble zein globules (39%) and water insoluble glutelin (40%). The latter has a very high molecular weight and a structure of a three dimensional network primarily provided by disulfide bridges between the various cysteine residues. In the kernel, the starch granules are to a large extent entrapped within the glutelin matrix. It is therefore generally accepted that it is necessary to loosen the glutelin network before starch granules of high quality and yield can be recovered.

Two parameters are commonly used to evaluate the suitability of steeped corn for wet milling, namely: (1) the amount of water absorbed by the corn kernel, and (2) the content of total soluble solids inside the kernel,

i.e. the extent of leaching of soluble components from the corn.

Both of these parameters are not sensitive in the sense that they tend to level off, namely to change only very little with time during the later stages of the steeping (beyond 20 hours or more in the conventional steeping process).

We have found that there is a good and sensitive correlation between the removal of insoluble protein from the corn during steeping and the quality of the produced starch. Thus, it has been found that the lower the level of residual insoluble protein in the corn, the lower the protein content of the produced starch, and consequently the higher the quality of the starch.

The reason for this is that the insoluble protein matrix envelopes and traps the starch granules. In order to free the starch granules, the protein matrix must be broken. The tri-dimensional protein network which must be broken is apparently primarily formed by disulfide protein linkages between the cystein residues, commonly referred to as S-S bridges.

We believe that the active species of $SO_2$ in cleaving the protein S-S bridges is $SO_3^{=}$. This species, however, only exists in significant proportions at relatively high pH values of about 5,0.

$$H_2SO_3 \Longleftrightarrow HSO_3^- + H^+ \quad (pK_{a1} = 1,9)$$

$$HSO_3^- \Longleftrightarrow SO_3^{=} + \quad (pK_{a2} = 6,9)$$

On the other hand, this species is charged and has very poor permeability as such into the corn kernel. Its penetration into the corn kernel is interfered with and prevented by charged molecules in cell membranes, cell walls, compounds, etc.

When fresh corn is steeped in acid medium, preferably at pH 3,5 - 3,8, a small amount of free $SO_2$ exists in equilibrium. This form is uncharged and is capable of penetrating into the corn kernel. However, inside the corn kernel the pH is high so that the $SO_2$ dissociates into $HSO_3^-$ and $SO_3^=$ . The $SO_3^=$ acts to cleave the protein and release the starch granules.

Subsequently, the pH within the corn begins to drop as the acid penetrates. The ionized forms of $SO_2$ are thus transformed back to the non-ionized species which can further penetrate deeper by diffusion into the core in a radial manner, re-ionizing to the active forms as new layers are reached, thus attacking and cleaving the protein.

In this manner, the pH gradient inside the corn which is uniquely maintained by our process permits penetration of the $SO_2$ throughout the corn kernel to cleave the protein and release the starch. Such penetration is not possible in the case of corn previously subjected to lactic fermentation because the lactic fermentation results in reduction of the pH within the corn kernels. In other words, in the conventional process the timing between the acid and the $SO_2$ is very poor and the cleavage of the protein by the $SO_2$ becomes relatively ineffective.

The reason for this is that in the conventional process when the pH in the corn is still high there is essentially no $SO_2$ in the medium or such small amounts that the $SO_2$ cannot penetrate into the corn kernel to cleave the protein and release the starch. Furthermore, when the $SO_2$ phase is reached in the conventional process utilizing the lactic fermentation phase, the pH inside the corn is already quite low so that the $SO_2$ that penetrates is not converted in significant amounts into $SO_3^{=}$ which is needed to effectively cleave the protein.

In addition, in the case of lactic fermentation, the pH of the medium, which is generally about 4 - 4,4, is not sufficiently low to provide significant proportions of free, non-ionized, $SO_2$ for penetration.

Consequently, in the case of a conventional process, the relationship between the pH inside and outside the corn kernel to the $SO_2$ levels in the medium are unfavourable and ineffective with respect to protein cleavage and release of starch.

In accordance with the further embodiment of the present invention, the acidic medium containing $SO_2$ may in addition contain a small quantity of a reducing agent such as cysteine or other compounds containing free SH groups. Such reducing agents also include thioglycerol and thioglycolic acid.

A considerable advantage of the process of the present

invention is that the same is applicable to any existing starch producing plant without change in the layout of the plant, and in addition the process can be carried out simply and with good control. The method of the present invention is most conveniently carried out in countercurrent in tanks made of wood, stainless steel or plastic materials which are capable of withstanding the temperature and acid conditions of the steeping operation. The acidic liquid is transferred countercurrently through the steeps and at times is recirculated over each steep. Consequently, in this process, the oldest corn is soaked or steeped with water containing the smallest amount of solubles and the freshest corn with water containing the largest amount of solubles. The corn is completely covered during steeping to assure complete action on all of the corn kernels. It is also possible to automate the flow and cycling of the steeped water.

The method of the present invention is generally carried out at atmospheric pressure, as in the case of conventional processes, although it is possible to utilize higher pressures with possible reduction in steeping time.

The method of the present invention is applicable in all cases where the corn has not been essentially subjected to lactic fermentation. A small amount of lactic fermentation that might have occurred, for example in the case of storage of wet corn prior to processing, will not affect the process, provided that their has been no essential lactic fermentation.

1

## Description of preferred embodiments

The following examples are given to further illustrate the present invention. The scope of the invention is not, however, meant to be limited to the specific details of the examples.

For comparative purposes, examples 1 and 3 describe the conventional steeping process which include lactic fermentation, while examples 2 and 4 correspond to examples 1 and 3, however utilizing the process of the present invention in which lactic fermentation is eliminated. The results are summarized in tables 1 and 2, wherein part A relates to the conventional process of examples 1 and 3, respectively and part B correspond to the process of the present invention of examples 2 and 4, respectively.

### Example 1 (using the conventional steeping process)

Corn at a rate of 6 ton/hr was introduced into the steeping tanks which were maintained at 50 $\pm$ 2°C. The total number of tanks were 18. Process water at the rate of 7,2 $m^3$/hr. were introduced countercurrently to the corn stream. Sodium bisulfite was added into the freshest process water to provide a level of 1500 ppm $SO_2$. The total steeping time was 48 hours and the pH was in the range of 3,95 - 4,4. Sulfur dioxide was gradually reduced during the steeping to a level of about 300 ppm in the steeping medium. This was obtained in a tank wherein the corn was in the midst of the steeping period (about 24 hours). At this low level of $SO_2$ lactic fermentation could occur. The maximum level of acidity was reached

in the steeping medium which encountered the fresh corn. In addition, the $SO_2$ content continues to drop until a final level of about 30 ppm was found in the most concentrated steeping medium encountering the fresh corn. Part A of Table 1 summarizes the steeping conditions and efficiency thereof.

Example 2 (using the process according to the present invention)

The steeping lay-out and conditions were identical to that described in Example 1 with respect to the corn type utilized and to the steeping medium, rates and temperature prevailing during the operation. However only nine tanks were utilized and the steeping time was only 20 hours. The sulfur dioxide was added to the steep water so that its concentration was always about 2000 ppm and rigorous control was applied to ensure that the level of $SO_2$ did not drop below 800 ppm (in order to prevent the formation of lactic fermentation). Phosphoric acid (70 % by wt. $H_3PO_4$) in an amount of about 7,5 kg was added at several locations to the steeping water, so that the pH was in the range of 3,0 to 3,9 along the steeping operation. Part B of Table 1, summarizes the steeping conditions and efficiency thereof

Table 1: Steeping conditions and efficiency thereof

| $SO_2$ content (ppm) | Steeping Time (hr) | Temp. (°C) | pH Range | Oil in Milled Corn* | Bound Starch in Fiber (%) | Protein in Primary Starch (%) | Protein in Final Starch Total (%) | Protein in Final Starch Soluble (%) | Protein in Gluten |
|---|---|---|---|---|---|---|---|---|---|
| **Part A: Conventional process** | | | | | | | | | |
| 1500 | 48 | 50 | 3,9-4,4 | 1,45 | 13,0 | 3,5 | 0,35 | 0,014 | 73,5 |
| **Part B: According to the present invention** | | | | | | | | | |
| 2000 | 20 | 50 | 3,0-3,9 | 1,40 | 12,5 | 3,2 | 0,31 | 0,006 | 73,8 |

*) following germ separation

The temperature in the two cases was the same = 50°C

The above results clearly show that the products in both cases are substantially the same, but the process of steeping according to the present invention requires only 20 hours compared with the 48 hours required by the conventional process.

The above comparative examples confirm that the process of the present invention is at least about twice as effective as the conventional process since the process of the present invention utilizes about one-half the time and about one-half the physical plant as the conventional process while achieving at least equivalent results.

Example 3 (using the conventional steeping process)

Corn at a rate of 15 ton/hr was introduced to each of 4 batteries of steeping tanks kept at 49 ± 2°C. Altogether there were 8 tanks, with a total holding capacity of 600 ton corn in each battery. Process water containing 700 ppm $SO_2$ at a rate of 19 $m^3$/hr per battery of steeping tanks was introduced in a countercurrent flow to the corn. The pH throughout the process was in the range of 4,0 - 4,4 in the various steeping tanks. Net steeping time was 36 - 40 hours. Results are presented in Table 2 (Part A).

Example 4 (using the process according to the present invention)

Corn at a rate of 15 ton/hr was introduced to each of 4 batteries of steeping tanks kept at 49 ± 2°C. Altogether there were 6 steeping tanks with a total holding capacity

of about 300 tons corn in each battery. Process water at a rate of 19 $m^3/hr$ per battery of steeping tanks were introduced in a countercurrent flow to the corn. Sulfuric acid was added to the first 2 tanks and to the last tank (in each battery, in each steeping cycle, from the corn side) so that the pH was kept in the range of 3,4 - 3,9 throughout the steeping process. $SO_2$ was added to the process water in an amount of 1000 ppm. In addition, sodium bisulfite (30 % solution) was added to the first and second tanks to obtain a concentration of about 1000 - 1200 ppm $SO_2$. The steeping time was between 19 - 20 hours. Under these conditions lactic fermentation was completely inhibited. Results are presented in Table 2 (part B).

Table 2: Steeping conditions and efficiency thereof

| Oil in Milled Corn * (%) | Bound Starch in Fiber (%) | Starch in Germs (%) | Protein in Primary Starch (%) | Protein in Final Starch | | Protein in Gluten Feed (%) | Protein in Gluten Meal (%) |
|---|---|---|---|---|---|---|---|
| | | | | Total (%) | Soluble (%) | | |
| **Part A: Conventional Process** | | | | | | | |
| 1,5 | 18,5 | 14,9 | 4,7 | 0,35 | 0,026 | 20,3 | 71,2 |
| **Part B: According to the present invention** | | | | | | | |
| 1,2 | 16,2 | 13,8 | 4,9 | 0,31 | 0,023 | 19,7 | 70,3 |

*) following germ separation

From the above Table, it appears that the results are substantially the same, or even slightly better concerning bound starch in fibers and starch in germ which were 16,2 and 13,8 according to the present invention compared to 18,7 and 14,9 respectively in the conventional process.

It is thus apparent that the process of the present invention not only reduces the time to about one-half of that of the conventional process, but in addition, the quality of the starch obtained is at least equal, and in fact somewhat better than in the case of the conventional process.

While the invention has been illustrated in particular with respect to specific treating conditions, it is apparent that variations and modifications of the invention can be made without departing from the spirit or scope hereof.

# CLAIMS

What is claimed is:

1. In the production of starch from corn, the method of steeping corn, which comprises steeping corn, which has essentially not been subjected to lactic fermentation, in an aqueous acidic medium containing $SO_2$ in an amount sufficient and at a pH sufficiently low to prevent lactic fermentation, whereby the $SO_2$ acts on the corn to promote separation of the starch therefrom in less time than in the case of corn subjected to lactic fermentation.

2. Method according to claim 1, wherein the amount of $SO_2$ is between about 400 - 4000 ppm.

3. Method according to claim 1, wherein the pH is between about 2,2 - 3,9.

4. Method according to claim 1, wherein the pH is between about 2,8 - 3,9.

5. Method according to claim 1, wherein the pH is between about 3,5 - 3,8.

6. Method according to claim 3, wherein the amount of $SO_2$ is between about 400 - 4000 ppm.

7. Method according to claim 4, wherein the amount of $SO_2$ is between about 1000 - 3500 ppm.

8. Method according to claim 5, wherein the amount of $SO_2$ is between about 1000 - 2000 ppm.

9. Method according to anyone of claims 1 to 8, wherein said method is effected at a temperature of between about 10 - 60°C, preferably at a temperature of between about 40 - 50°C.

10. Method according to anyone of claims 1 to 9, wherein the steeping is carried out for a time period of about 18 - 24 hours, preferably for a time period of about 18 - 20 hours.

11. Method according to anyone of claims 1 to 10, wherein agitation is effected during the steeping, preferably agitation is effected for the first 6 - 8 hours and the remainder of the steeping is effected without agitation.

12. Method according to anyone of claims 1 to 11, wherein the pH is maintained by addition of an acid to the aqueous medium, preferably said acid is a mineral acid or an organic acid.

13. Method according to anyone of claims 1 to 12, wherein the aqueous acidic medium also includes a reducing agent.

14. Method according to anyone of claims 1 to 13, wherein the method is effected at atmospheric pressure.